# EUROPEAN PATENT APPLICATION

(11) **EP 4 844 663 A1**
(43) Date of publication of application: **25.11.2026**
(21) Application number: 26179801.1
(22) Date of filing: 20.05.2026
(51) Int. Cl.: G06Q 50/02, G06N 20/00, G06Q 10/04

(54) **METHOD AND SYSTEM TO QUANTIFY IMPACT OF CLIMATE CHANGE ON CROP**

(30) Priority: 21.05.2025 IN 202521049094
(71) Applicant: Tata Consultancy Services Limited, Mumbai, Maharashtra 400 021 (IN)
(72) Inventor: PATIL, Vidit Mahesh, 400601 Thane, Maharashtra (IN); KULAT, Rushikesh Dattatraya, 400601 Thane, Maharashtra (IN); BOSE CHOUDHURY, Swagatam, 400601 Thane, Maharashtra (IN); SARANGI, Sanat, 400601 Thane, Maharashtra (IN); SINGH, Dineshkumar Jang Bahadur, 400601 Thane, Maharashtra (IN); PAPPULA, Srinivasu, 500081 Hyderabad, Telangana (IN)
(74) Representative: Goddar, Heinz J.

(57) **Abstract**

The present invention relates to the field of agriculture. Existing methods do not consider crops' ability to recover under favorable environmental conditions which makes the assessment of climatic impact inaccurate. Thus, embodiments of present disclosure provide a method and system to quantify impact of climate change on crop by considering recovery opportunity of the crop after facing climatic stress. Information related to the crop such as geo-location, sowing date, and weather information is received. Using this information, crop growth is simulated to generate crop stage data and identify optimal growing days. Climate stress index is determined by using weather information and crop stage data. Recovery opportunity index is determined based on climate stress index, crop stage data, and optimal growing days. Finally, a Climate linked Farm Health Score (CFHS) is computed based on the climate stress index, the recovery opportunity index, and an estimated yield of crop.

## Description

### CROSS-REFERENCE TO RELATED APPLICATIONS AND PRIORITY

The present application claims priority from Indian application no. 202521049094, filed on May 21, 2025.

### TECHNICAL FIELD

The present invention generally relates to the field of plant health monitoring, and, more particularly, to a method and system to quantify impact of climate change on crops.

### BACKGROUND

In a large spatial region under a single jurisdiction, where climatic conditions exhibit significant variations across locations, it becomes challenging to manage crop performance effectively. A farmer cultivating a crop at a specific location struggles to predict how well the crop will perform as the season progresses. This uncertainty arises from microclimatic variations across the region that may not be captured in generic forecasts and the complex interplay of crop-sensitive ambient parameters like temperature, rainfall distribution, humidity, and their temporal fluctuations. Agriculture service providers, who must manage and support crop health across the entire region, face significant difficulties in assessing crop performance variability across different zones, identifying high-risk or low-performing areas to allocate resources efficiently, and making informed decisions to mitigate potential yield losses due to localized climatic anomalies. In essence, there is a lack of an adaptive, data-driven framework capable of dynamically analyzing and quantifying crop health variability across diverse zones within the region. This gap inhibits proactive decision-making and the effective management of resources at both the farm and regional levels.

Current systems focus on identifying climatic stress but do not account for recovery periods or the crop's ability to recover under favorable conditions, leaving gaps in decision-making. There is no holistic integration of stress index, recovery metrics, and yield predictions, making it difficult for stakeholders to assess overall farm health comprehensively. The outputs of existing models are often too technical or complex, limiting their usability for farmers, banks, and policymakers, who need actionable and interpretable insights.

### SUMMARY

Embodiments of the present disclosure present technological improvements as solutions to one or more of the above-mentioned technical problems recognized by the inventors in conventional systems. For example, in one embodiment, a method to quantify impact of climate change on crop is provided. The method includes receiving a plurality of inputs comprising a geo-location, an information related to a crop, a daily forecast weather information, and a sowing date of the crop and simulating a growth pattern of the crop based on the plurality of inputs to generate a crop stage data and identify optimal growing days of the crop. Further, the method includes determining a climate stress index using a first trained machine learning model based on the daily forecast weather information and the crop stage data and determining a recovery opportunity index based on the climate stress index, the crop stage data, and the optimal growing days using a trained Machine Learning (ML) model. Furthermore, the method includes estimating a yield of the crop based on the plurality of inputs and a historical data pertaining to the crop and computing a Climate linked Farm Health Score (CFHS) based on the climate stress index, the recovery opportunity index, and the estimated yield, wherein the CFHS quantifies impact of climate on the crop.

In another aspect, a system to quantify impact of climate change on crop is provided. The system includes: a memory storing instructions; one or more communication interfaces; and one or more hardware processors coupled to the memory via the one or more communication interfaces, wherein the one or more hardware processors are configured by the instructions to receive a plurality of inputs comprising a geo-location, an information related to a crop, a daily forecast weather information, and a sowing date of the crop and simulate a growth pattern of the crop based on the plurality of inputs to generate a crop stage data and identify optimal growing days of the crop. Further, the one or more hardware processors are configured to determine a climate stress index using a first trained machine learning model based on the daily forecast weather information and the crop stage data and determine a recovery opportunity index based on the climate stress index, the crop stage data, and the optimal growing days using a trained Machine Learning (ML) model. Furthermore, the one or more hardware processors are configured to estimate a yield of the crop based on the plurality of inputs and a historical data pertaining to the crop and compute a Climate linked Farm Health Score (CFHS) based on the climate stress index, the recovery opportunity index, and the estimated yield, wherein the CFHS quantifies impact of climate on the crop.

In yet another aspect, there are provided one or more non-transitory machine-readable information storage mediums comprising one or more instructions which when executed by one or more hardware processors cause a method to quantify impact of climate change on crop. The method includes receiving a plurality of inputs comprising a geo-location, an information related to a crop, a daily forecast weather information, and a sowing date of the crop and simulating a growth pattern of the crop based on the plurality of inputs to generate a crop stage data and identify optimal growing days of the crop. Further, the method includes determining a climate stress index using a first trained machine learning model based on the daily forecast weather information and the crop stage data and determining a recovery opportunity index based on the climate stress index, the crop stage data, and the optimal growing days using a trained Machine Learning (ML) model. Furthermore, the method includes estimating a yield of the crop based on the plurality of inputs and a historical data pertaining to the crop and computing a Climate linked Farm Health Score (CFHS) based on the climate stress index, the recovery opportunity index, and the estimated yield, wherein the CFHS quantifies impact of climate on the crop.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system to quantify impact of climate change on crop, according to some embodiments of the present disclosure.
FIG. 2 is a flow diagram illustrating a method to quantify impact of climate change on crop, using the system of FIG. 1, according to some embodiments of the present disclosure.
FIG. 3 is an alternate representation of the method illustrated in FIG. 2, according to some embodiments of the present disclosure.
FIG. 4 illustrates a climate stress monitoring module for determining a climate stress index, according to some embodiments of the present disclosure.
FIG. 5 illustrates a recovery opportunity identification module for determining a recovery opportunity index, according to some embodiments of the present disclosure.
FIG. 6 illustrates a Climate linked Farm Health Score (CFHS) module for computing a CFHS, according to some embodiments of the present disclosure.
FIG. 7 illustrates Heat Stress Index (HSI) values over a period of 20 days, according to some embodiments of the present disclosure.
FIG. 8 illustrates Frost Stress Index (FSI) values over a period of 20 days, according to some embodiments of the present disclosure

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

It is important to assess impact of climate on a crop to take strategic decisions by various stakeholders such as a farmer, an agricultural service provider and the like. Existing methods use only climate or weather related information to assess its impact on the crop. But they do not consider recovery periods or the crop's ability to recover under favorable conditions which makes the assessment inaccurate. Thus, embodiments of present disclosure provide a method and system to quantify impact of climate change on crop by considering Recovery Opportunity (RO) of the crop after facing climatic stress. Initially information related to the crop such as geo-location, sowing date, and weather information is received. Using this information, crop growth is simulated to generate a crop stage data and identify optimal growing days of the crop. Next, a climate stress index is determined using weather information and crop stage date, and a recovery opportunity index is determined based on the climate stress index, the crop stage data, and the optimal growing days. Yield of the crop is estimated based on the crop related information and a historical data pertaining to the crop. Finally, a Climate linked Farm Health Score (CFHS) is computed based on the climate stress index, the recovery opportunity index, and the estimated yield. Thus, embodiments of present disclosure provides an integrated approach to climate stress monitoring by continuously assessing multiple stress factors (heat, frost, and rainfall) in real time and evaluating their combined impact on crops. The recovery opportunity index analyses recovery opportunities, where it is identified if the crop had a chance to recover from stress post any stress window during growing season, a crucial factor often overlooked in conventional methods. The CFHS is a single, intuitive metric designed for farmers, service providers, banks, and policymakers. This score simplifies complex climate impact data, enabling informed decision-making without requiring technical expertise. The CFHS serves as a unified metric that translates complex weather stress events such as heatwaves, frost, or erratic rainfall into a quantifiable score that reflects the crop's vulnerability and resilience during its growing season. Unlike traditional metrics that only measure yield or weather deviation, CFHS uniquely includes the crop's ability to recover post-stress, making it a more holistic indicator of climate impact. Long-term CFHS trends can inform climate-resilient agriculture policies, including the need for shifting crop calendars, introducing stress-tolerant varieties, or changing insurance coverage models.

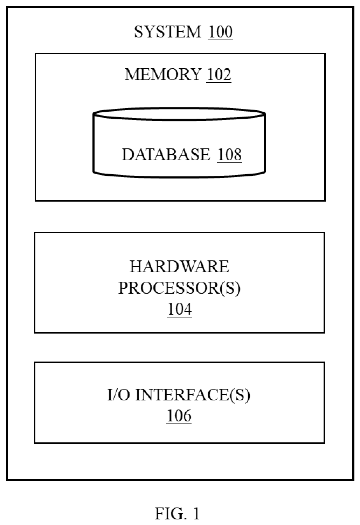

Referring now to the drawings, and more particularly to FIGS. 1 to 8, where similar reference characters denote corresponding features consistently throughout the figures, there are shown preferred embodiments, and these embodiments are described in the context of the following exemplary system and/or method.

FIG. 1 illustrates an exemplary block diagram of a system to quantify impact of climate change on crop, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

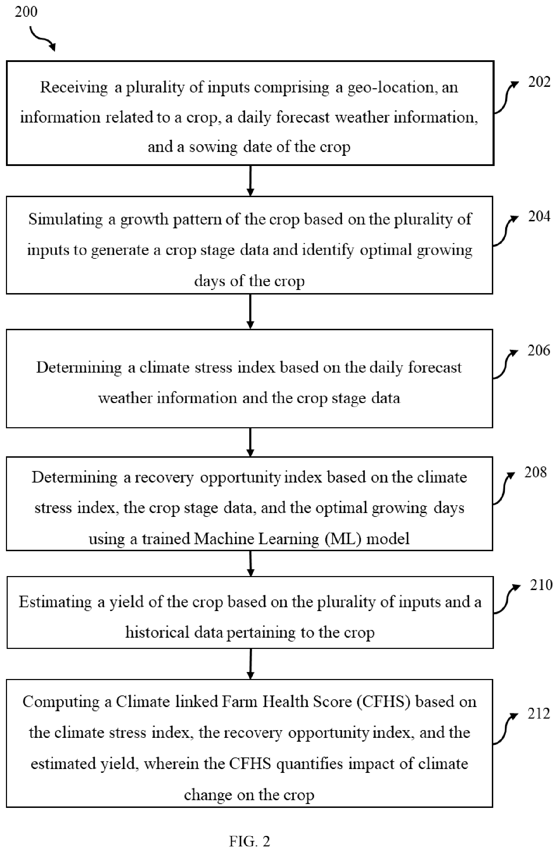

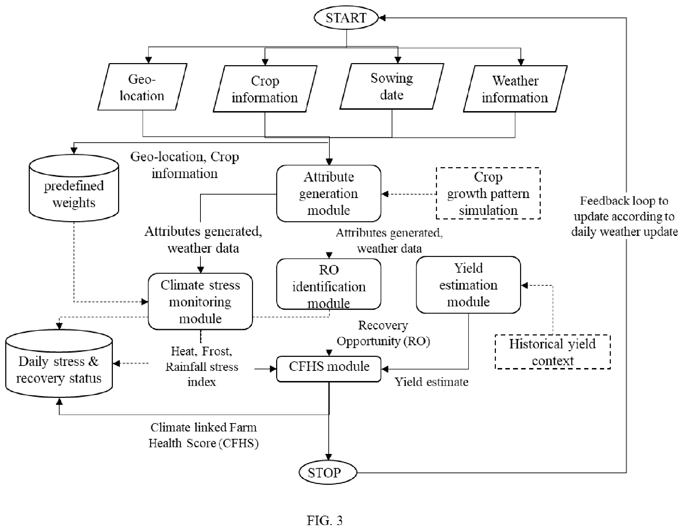

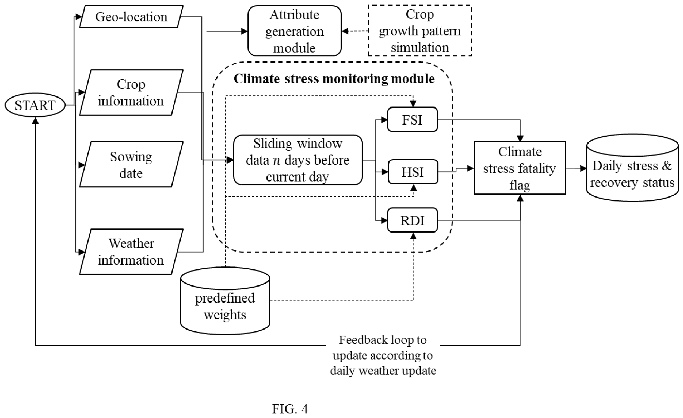

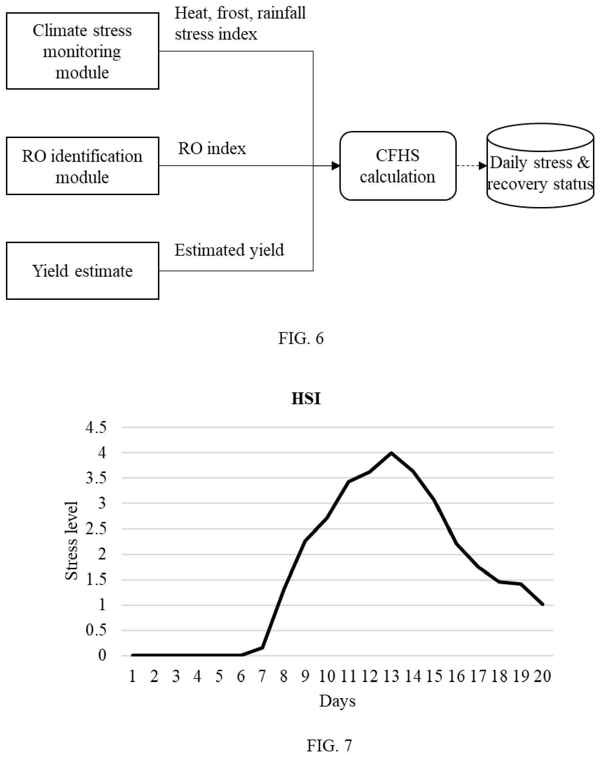

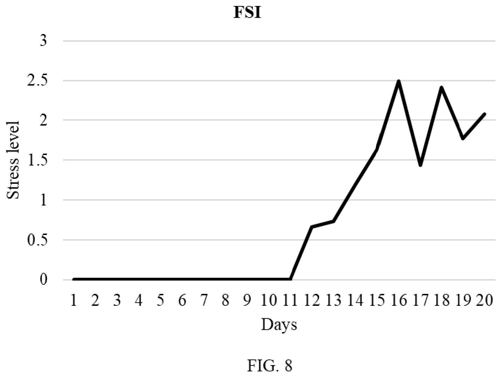

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The memory 102 stores a plurality of modules (not shown in FIG. 1) comprising attribute generation module, climate stress monitoring module, recovery opportunity identification module, yield prediction module and climate linked farm health score module. The plurality of modules store instructions to perform different functionalities required to implement the method of FIG. 2. The database 108 stores information pertaining to inputs fed to the system 100 and/or outputs generated by the system (e.g., at each stage), specific to the methodology described herein. Functions of the components of system 100 are explained in conjunction with flow diagrams of FIGS. 2 and 3, block diagrams of FIGS. 4-6, and experimental data illustrated in FIGS. 7 and 8 to quantify impact of climate change on a crop.

FIG. 2 is a flow diagram illustrating a method 200 to quantify impact of climate change on crop, using the system of FIG. 1, according to some embodiments of the present disclosure. In an embodiment, the system 100 comprises one or more data storage devices or the memory 102 operatively coupled to the processor(s) 104 and is configured to store instructions for execution of steps of the method 200 depicted in FIG. 2 by the processor(s) or one or more hardware processors 104. The steps of the method of the present disclosure will now be explained with reference to the components or blocks of the system 100 as depicted in FIG. 1, the flow diagrams of FIGS. 2 and 3, block diagrams of FIGS. 4-6, and experimental data illustrated in FIGS. 7 and 8 to quantify impact of climate change on a crop. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method 200, the one or more hardware processors 104 are configured to receive a plurality of inputs comprising a geo-location, an information related to a crop, a daily forecast weather information, and a sowing date of the crop. The geo-location includes coordinates of the location at which the crop is being cultivated. Information related to crop may include, for example, type of the crop, nature of the crop and so on. The daily forecast weather information may include temperature data, wind speed and so on. Further, at step 204 of the method 200, the one or more hardware processors 104 are configured to simulate a growth pattern of the crop based on the plurality of inputs to generate a crop stage data and identify optimal growing days of the crop. The crop growth is simulated by using crop sowing date and the weather information to calculate Growing Degree Days (GDD) which gives information of how much heat is accumulated based on changing temperatures. Based on the heat accumulated, stage of growth of the crop is identified. The optimal growing days are determined by using thresholds selected based on the crop, stage the crop is in, and weather information.

Next, at step 206 of the method 200, the one or more hardware processors 104 are configured to determine a climate stress index based on the daily forecast weather information and the crop stage data. The climate stress index is at least one of i) a Heat Stress Index (*HSI*), ii) a Frost Stress Index (*FSI*), and iii) a Rainfall Distribution Index (*RDI*), determined dynamically based on a temperature value comprised in the daily forecast weather information and the crop stage data. While conventional techniques use only weather information which is insufficient because not all crop stages are equally sensitive to stress, the method 200 uses crop stage data which determines the crop's vulnerability window to specific stress types. For example, frost during flowering of crop is more damaging than during germination and heat stress during grain filling can have a higher yield impact than during vegetative growth. The attribute generation model identifies the crop stage the plant is currently in by calculating total heat accumulated by crop. Then the temperature value is compared with the crop stage specific stress threshold. If stress thresholds are breached during a vulnerable stage, the corresponding stress index (*FSI, HSI,* or *RDI*) is computed. For example, if temperatures drop below crop-specific frost tolerance thresholds, then the FSI is computed. If temperatures exceed heat stress thresholds for a sustained period, then, the HSI is computed. If rainfall distribution deviates significantly from optimal crop water requirements, then, the RDI is computed. As illustrated in FIG. 4, a sliding window over n days of weather information prior to a current day is taken for determining the climate stress index. Heat stress is identified if there was a prolonged exposure of heat beyond crop's tolerance level (i.e., the temperature exceeds a heat stress threshold at that particular stage of crop growth). In an embodiment, the HSI is determined using a Machine Learning (ML) model which takes real time climate data, and crop stage data as input, and provides the HSI for future events. The ML model is a combination of time-series analysis model to predict weather trends and regression based model trained on historic heat stress events. The ML model self-corrects by learning from deviations between predicted and actual results, enhancing long-term prediction accuracy. In another embodiment, the HSI is determined according to equation 1, wherein y is crop stage specific threshold value, *wᵢ* is a weight applied for temperature on *i*^{th} day, *Tᵢ* is the temperature on *i*^{th} day, and *F* is an adjustment factor. The weight is applied for each day in increasing order, e.g. [0.1, 0.1, 0.1, 0.15, 0.15, 0.2, 0.2] if n is considered to be 7. The weight increases as days progresses so that recent days have a higher priority. The adjustment factor is defined as in equation 2. If *HSI <* 1, then 'No Stress', if 1 *<= HSI <* 2, then 'Mild stress', if 2 *<= HSI* < 3, 'Moderate stress' and if *HSI* >= 3, 'Severe stress'. $HSI = y . \left[\frac{{\sum }_{i = 1}^{n} {w}_{i} ⋅ max \left({T}_{i}-x,0\right)}{{\sum }_{i = 1}^{n} {w}_{i}}\right] ⋅ F$ (1) $F = \left\{\begin{matrix}1 if {T}_{1} \leq x and {T}_{n} > x \\ max \left(0.5, \frac{{T}_{n}}{x}\right) if {T}_{n} \leq x\end{matrix}\right.$ (2)

Frost stress is identified if temperatures drop below crop-specific frost tolerance thresholds. In an embodiment, FSI is determined using a ML model that takes real time climate data, and crop stage data as input, and provides the FSI for future events. The ML model is a combination of time-series analysis model to predict whether trends and regression based model trained on historic frost stress events. The model self-corrects by learning from deviations between predicted and actual results, enhancing long-term prediction accuracy. In another embodiment, FSI is determined according to equation 3, wherein *y* is crop stage specific threshold value, *wᵢ* is a weight applied for temperature on *i*^{th} day, *Tᵢ* is the temperature on *i*^{th} day, and *F* is an adjustment factor. The weight is applied for each day in increasing order, e.g. [0.1, 0.1, 0.1, 0.15, 0.15, 0.2, 0.2] if n is considered to be 7. The weight increases as days progresses so that recent days have a higher priority. The adjustment factor is defined as in equation 4. If *FSI <* 1, then 'No Stress', if 1 *<= FSI <* 2, then 'Mild stress', if 2 *<= FSI <* 3, 'Moderate stress' and if *FSI* >= 3, 'Severe stress'. $FSI = y . \left[\frac{{\sum }_{i = 1}^{n} {w}_{i} ⋅ max \left(x-{T}_{i},0\right)}{{\sum }_{i = 1}^{n} {w}_{i}}\right] ⋅ F$ (3) $F = \left\{\begin{matrix}1 if {T}_{1} \geq x and {T}_{n} < x \\ max \left(0.5, \frac{{T}_{n}}{x}\right) if {T}_{n} \leq x\end{matrix}\right.$ (4)

If rainfall distribution over a period of n days deviate significantly from optimal crop water requirements, then RDI is computed. The RDI analyzes if there were dry spells or rainfall clustering situations which could affect the crop. RDI is determined according to equation 5, in an embodiment. In another embodiment, RDI is determined by using a ML model which takes real time climate data, and crop stage data as input, and provides the RDI for future events. The ML model is a combination of time-series analysis model to predict trends in precipitation and regression-based model trained on historic events caused due to dry spells or rainfall clustering. The ML model self-corrects by learning from deviations between predicted and actual results, enhancing long-term prediction accuracy. $Rainfall clustering = {\sum }_{i = 1}^{n} Rainfall _ sum is > Threshold$ (5)

Further, at step 208 of the method 200, the one or more hardware processors 104 are configured to determine a Recovery Opportunity (RO) index based on the climate stress index, the crop stage data, and the optimal growing days using a trained Machine Learning (ML) model. The trained Machine Learning (ML) model comprises of a combination of time series analysis model and a regression model, trained on historical data on crop stress-recovery cycles. The time-series analysis model identifies weather trends, and the regression model is trained on crop recovery datasets to predict the likelihood and extent of recovery. The ML model uniquely combines multiple stress indices (heat, frost, rainfall) and evaluates recovery feasibility by weighting the influence of each stress and the crop's physiological resilience. The ML model self-corrects by learning from deviations between predicted and actual recovery outcomes, enhancing long-term prediction accuracy. The RO index introduces a nuanced understanding of stress periods, distinguishing between irreversible damage and recoverable setbacks, making CFHS a more precise indicator of farm resilience.

Further, at step 210 of the method 200, the one or more hardware processors are configured to estimate a yield of the crop based on the plurality of inputs and a historical data pertaining to the crop. The yield is estimate using a regression model which is trained based on historic weather data, historic yield data, historic sowing information.

Finally at step 212 of the method 200, the one or more hardware processors are configured to compute a Climate linked Farm Health Score (CFHS) based on the climate stress index, the recovery opportunity index, and the estimated yield. The CFHS quantifies impact of climate on the crop. The CFHS is computed according to equation 6, wherein *HSI* is the Heat Stress Index, FSI is the Frost Stress Index, RDI is the Rainfall Distribution Index, RO is the Recovery Opportunity Index, *yield_{estimated}* is the estimated yield of the crop, *yieldₘₐₓ* is a maximum yield potential of the crop, *α, β* and *γ* are weights assigned to HSI, FSI and RDI, respectively. $CFHS = \left[1-\left(α.HSI+β.FSI+γ.RDI\right)\right] . RO . \left[\frac{{yield}_{estimated}}{{yield}_{max}}\right]$ (6)

FIG. 3 is an alternate representation of the method illustrated in FIG. 2, according to some embodiments of the present disclosure. The method begins with receiving geo-location, crop, daily forecast weather information, and sowing date as input and gives CFHS as output. The inputs are given to the attribute generation module to generate crop growth simulation pattern. Next, the climate stress monitoring module quantifies the stress experienced by crops due to extreme climate events, including heat, frost, and rainfall anomalies. This is calculated daily in order to track impact of climate stress. Climate stress index determined by the climate stress monitoring module is stored in the database 108 for future use. The Recovery Opportunity (RO) index module utilizes the climate stress index data generated previously in order to determine intensity of stress, calculates the proportion of recovery days relative to the total stage duration and stage-specific sensitivity threshold to generate the RO index. Further, the yield estimation module utilizes the parameters generated by the attribute generation module along with historical yield context for the region to estimate the yield for the ongoing season. Finally, the CFHS module encapsulates all the generated index, also utilizing data from estimated yield module in order to give out a final score which gives overall view of impact of climate change on crop or farm health. Using the feedback loop the scores are refreshed daily as the weather data is updated and progression of this score can be viewed in projected view based on forecasted data, current view based on actual data.

FIG. 4 illustrates a climate stress monitoring module for determining a climate stress index, according to some embodiments of the present disclosure. The climate stress monitoring module receives geo-spatial information (alternatively referred to as geo location, geo coordinates etc. which refer to the geographical location at which the crop is grown), crop sowing date, crop related information, and weather forecast data as input. In addition, crop growth stage data is received from attribute generation module which simulates crop growth pattern. Further, the climate stress monitoring module obtains weights based on the crop and geo-spatial information from the database 108. Next, the climate stress monitoring module generates stress indices for heat, frost and precipitation related conditions as described in step 206 of the method 200. The generated indexes are stored in the database 108. This is repeated on update of daily weather data for next n days window.

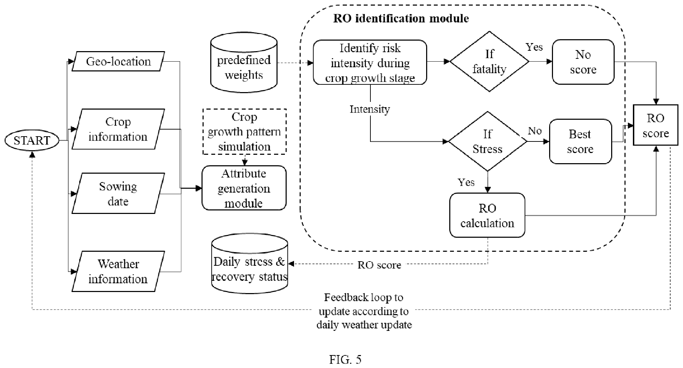

FIG. 5 illustrates a Recovery Opportunity (RO) identification module for determining a recovery opportunity index, according to some embodiments of the present disclosure. The RO identification module receives geo-spatial, crop sowing, crop, crop stage data, weather data and climate stress index as input. Next, the stress intensity is identified based on the values computed for the Heat Stress Index (HSI), Frost stress index (FSI) or Rainfall Distribution Index (RDI), depending on the type of climatic change affecting the crop. For example, the stress indices of individual days are averaged to determine stress intensity for the overall period. Further, an intensity weight is assigned according to intensity of stress identified and optimal growing days during the crop stage window are identified. If the intensity is high, the RO identification module applies a larger penalty, leading to lower RO score, conversely if the stress intensity is low, the penalty applies is smaller, indicating better chance for the crop to recover. Finally, the RO identification module calculates RO index as described in step 208 of the method 200. The process is repeated at end of each crop growing stage.

FIG. 6 illustrates a Climate linked Farm Health Score (CFHS) module for computing a CFHS, according to some embodiments of the present disclosure. The CFHS module receives heat stress index data, frost stress index data, rainfall stress data, RO index data, yield estimate data as input. Next, the climate stress indexes, and recovery index are normalized using min-max scaling, where the observed value is adjusted based on the historic minimum and maximum values identified for that region and crop. Finally, CFHS is calculated as described in step 212 of the method 200 and stored in the database 108.

The calculated CFHS can be used for a wide variety of applications. Insurance companies can integrate CFHS into an insurance model, using score to trigger claim disbursement and adjust premiums based on real-time climate changes. Banks and financial institutions can use CFHS to assess farm resilience, offering better loan terms to high scoring farms and early intervention for farms which are at risk. For example, consider a bank offers seasonal crop loans to farmers. In recent years, unpredictable weather has increased loan defaults and reduced yields. The bank uses CFHS data from the last 5 years to map climate vulnerability of different farmland zones and zones with consistently low CFHS (due to recurring heat stress and poor recovery) are flagged as high risk. CFHS can also be used for loan decision making. Farmers applying for loans share their land geo-location and crop plans. The method 200 simulates the upcoming season's risk using forecast weather data and assigns a projected CFHS. Farmers with medium-to-high CFHS receive loans faster and with better terms. Thus, CFHS helps in more climate aware lending, reduce default rates and incentivizes farmers to adopt climate-smart practices that improve their CFHS. Government bodies can leverage CFHS to identify climate vulnerable regions, enabling targeted subsidies and adaptive farming policies.

### USE CASE EXAMPLE

The method 200 has been implemented to analyse impact of climate change on barley crop in Finland. The input data includes geo-location of farmland in Finland, crop specific information such as barley type, daily weather information specifically maximum and minimum temperatures (*Temp_MAX* and *Temp_Min,* respectively) as summarized in Table 1 and sowing date of the crop. Using this data, the crop growth pattern is simulated to derive crop stage timeline and to identify number of optimal growing days within each stage. Based on the simulation outcomes, a crop stage specific threshold value, denoted as '*y*', is determined to be 1 for this case. The heat stress threshold value is considered as 24 and frost stress threshold value is considered as -5. Thus, the days on which temperature exceeds 24°C, the crop experiences heat stress and the days on which the temperature drops below -5°C the crop experiences frost stress. No rainfall was observed on these days, hence RDI is not calculated. The weights for *n*-day window, here *n* being 7, (*w*₁ to *w₇*) are [0.1, 0.1, 0.1, 0.15, 0.15, 0.2, 0.2]. The adjustment factor *F* for heat stress (*Fₕₑₐₜ*) which captures crop sensitivity to stress intensity is computed using temperature data and outlined in table 1. Based on the weights, temperature value and stress threshold values, HSI is calculated according to equation 1. The HSI values plotted on a graph are illustrated in FIG. 7.

**Table 1**

| Day | *Temp_MAX* | *Temp_Min* | *F* | *HSI* |
|---|---|---|---|---|
| 1 | 15.7 | 14.26 | 0 | 0 |
| 2 | 16.3 | 13.58 | 0 | 0 |
| 3 | 19.45 | 16.72 | 0 | 0 |
| 4 | 22.36 | 19.77 | 0 | 0 |
| 5 | 22.04 | 20.19 | 0 | 0 |
| 6 | 23.2 | 22.56 | 0 | 0 |
| 7 | 24.88 | 21.93 | 0.964630225 | 0.16977492 |
| 8 | 30.45 | 27.61 | 1 | 1.466 |
| 9 | 29.47 | 26.93 | 1 | 2.516 |
| 10 | 28.1 | 25.22 | 1 | 3.0135 |
| 11 | 29.55 | 26.81 | 1 | 3.806 |
| 12 | 27.71 | 25.03 | 1 | 4.0205 |
| 13 | 28.85 | 28.79 | 1 | 4.4395 |
| 14 | 26.51 | 24.81 | 0.905318748 | 4.040437571 |
| 15 | 23.25 | 21.25 | 1.032258065 | 3.404387097 |
| 16 | 24.09 | 22.04 | 0.99626401 | 2.448816936 |
| 17 | 25.23 | 22.25 | 0.951248514 | 1.951486326 |
| 18 | 25.96 | 23.20 | 0.92449923 | 1.625731895 |
| 19 | 25.81 | 24.25 | 0.929872143 | 1.569624177 |
| 20 | 23.42 | 20.60 | 1.024765158 | 1.127754056 |

Based on the determined HSI values for individual days, average heat stress intensity is 2.542822. Among the total 20 days, only 8 days were optimal growing days. This data is fed into a trained ML model to predict RO index. Based on HSI, RO index is 0.101614 which indicates low recovery opportunity. Using the HSI, FSI and RO values and considering yield ratio as 0.196, CFHS is determined according to equation 6 as 0.03.

The temperature values recorded at a different timeline are given in table 2. In this scenario, the temperature drops below frost stress threshold, hence the crop experiences frost stress. The adjustment factor calculated based on the temperature values and the FSI for each day is outlined in table 2. The FSI values plotted on a graph are illustrated in FIG. 8. Average frost stress intensity is 1.60004. Suppose there are 2 optimal growing days among the 20 days, RO index is calculated as 0.03846 indicating low recovery opportunity.

**Table 2**

| Day | *Temp_Max* | *Temp_Min* | *F* | *FSI* |
|---|---|---|---|---|
| 1 | 2.14 | -0.92 | 0 | 0 |
| 2 | 2.14 | -0.93 | 0 | 0 |
| 3 | 3.68 | -1.94 | 0 | 0 |
| 4 | 2.54 | -0.95 | 0 | 0 |
| 5 | 1.32 | -2.27 | 0 | 0 |
| 6 | 1.32 | -2.88 | 0 | 0 |
| 7 | 1.97 | -2.27 | 1 | 0 |
| 8 | 3.31 | -0.92 | 1 | 0 |
| 9 | -0.47 | -2.47 | 1 | 0 |
| 10 | -0.88 | -2.88 | 1 | 0 |
| 11 | -2.76 | -4.76 | 1 | 0 |
| 12 | -5.27 | -7.27 | 1.454 | 0.660116 |
| 13 | -3.86 | -5.86 | 1.172 | 0.733672 |
| 14 | -4.8 | -6.8 | 1.36 | 1.1866 |
| 15 | -4.82 | -6.82 | 1.364 | 1.627934 |
| 16 | -5.92 | -7.92 | 1.584 | 2.493216 |
| 17 | -2.76 | -4.76 | 1 | 1.44 |
| 18 | -5.27 | -7.27 | 1.454 | 2.410732 |
| 19 | -3.86 | -5.86 | 1.172 | 1.772064 |
| 20 | -4.8 | -6.8 | 1.36 | 2.07604 |

CFHS calculation for various scenarios are given below:
i. High heat stress and low recovery opportunity: Suppose HSI is 0.7, FSI is 0, RDI is 0.1, RO is 0.5 and yield ratio is 0.7. Then, CFHS is 0.196.
ii. Mild heat stress and high recovery opportunity: Suppose HSI is 0.4, FSI is 0, RDI is 0, RO is 0.8 and yield ratio is 0.8. Then, CFHS is 0.59.
iii. Low heat stress and high recovery opportunity: Suppose HSI is 0.2, FSI is 0, RDI is 0, RO is 0.9 and yield ratio is 0.8. Then, CFHS is 0.69.
iv. High frost stress and low recovery opportunity: HSI is 0, FSI is 0.6, RDI is 0, RO is 0.03, and yield ratio is 0.5. Then, CFHS is 0.064.
v. Mild frost stress and high recovery opportunity: HSI is 0, FSI is 0.3, RDI is 0, RO is 0.8, and yield ratio is 0.8. Then, CFHS is 0.601.
vi. Low frost stress and high recovery opportunity: HSI is 0, FSI is 0.1, RDI is 0, RO is 0.9, and yield ratio is 0.8. Then, CFHS is 0.705.
Thus, it can be inferred that the recovery opportunity largely affects the farm health score. By including the recovery opportunity, the embodiments of present disclosure provides a realistic assessment of farm health due to climatic stresses.

The CFHS quantifies the impact of climate stress and recovery opportunity into a single, interpretable score. For farmers it will help in crop planning, lower CFHS may prompt early intervention such as changing sowing dates, crop variety, or adopting irrigation. For banks and credit institutions, it can help in loan assessment as described above. For government bodies, CFHS can help identify stress-prone zones needing support or resilience-building. In short, CFHS bridges the gap between climate data and agricultural decisions, converting technical insights into actionable outcomes across the ecosystem.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:
receiving (202), via one or more hardware processors, a plurality of inputs comprising a geo-location, an information related to a crop, a daily forecast weather information, and a sowing date of the crop;
simulating (204), via the one or more hardware processors, a growth pattern of the crop based on the plurality of inputs to generate a crop stage data and identify optimal growing days of the crop;
determining (206), via the one or more hardware processors, a climate stress index based on the daily forecast weather information and the crop stage data;
determining (208), via the one or more hardware processors, a recovery opportunity index based on the climate stress index, the crop stage data, and the optimal growing days using a trained Machine Learning (ML) model;
estimating (210), via the one or more hardware processors, a yield of the crop based on the plurality of inputs and a historical data pertaining to the crop; and
computing (212), via the one or more hardware processors, a Climate linked Farm Health Score (CFHS) based on the climate stress index, the recovery opportunity index, and the estimated yield, wherein the CFHS quantifies impact of climate on the crop.

2. The method as claimed in claim 1, wherein the climate stress index is at least one of i) a heat stress index, ii) a frost stress index, and iii) a rainfall distribution index, determined dynamically based on a temperature value comprised in the daily forecast weather information and the crop stage data..

3. The method as claimed in claim 2, wherein the CFHS is computed as: $CFHS = \left[1-\left(α.HSI+β.FSI+γ.RDI\right)\right] . RO . \left[\frac{{yield}_{estimated}}{{yield}_{max}}\right]$ , wherein *HSI* is the Heat Stress Index, FSI is the Frost Stress Index, RDI is the Rainfall Distribution Index, RO is the Recovery Opportunity Index, *yield_{estimated}* is the estimated yield of the crop, and *yieldₘₐₓ* is a maximum yield potential of the crop.

4. The method as claimed in claim 1, wherein the trained machine learning model comprises a combination of time series analysis model and a regression model, trained on historical data on crop stress-recovery cycles.

5. A system (100), comprising:
a memory (102) storing instructions;
one or more Input/Output (I/O) interfaces (106); and
one or more hardware processors (104) coupled to the memory (102) via the one or more communication interfaces (106), wherein the one or more hardware processors (104) are configured by the instructions to:
receive a plurality of inputs comprising a geo-location, an information related to a crop, a daily forecast weather information, and a sowing date of the crop;
simulate a growth pattern of the crop based on the plurality of inputs to generate a crop stage data and identify optimal growing days of the crop;
determine a climate stress index based on the daily forecast weather information and the crop stage data;
determine a recovery opportunity index based on the climate stress index, the crop stage data, and the optimal growing days using a trained Machine Learning (ML) model;
estimate a yield of the crop based on the plurality of inputs and a historical data pertaining to the crop; and
compute a Climate linked Farm Health Score (CFHS) based on the climate stress index, the recovery opportunity index, and the estimated yield, wherein the CFHS quantifies impact of climate on the crop.

6. The system as claimed in claim 5, wherein the climate stress index is at least one of i) a heat stress index, ii) a frost stress index, and iii) a rainfall distribution index, determined dynamically based on a temperature value comprised in the daily forecast weather information and the crop stage data.

7. The system as claimed in claim 6, wherein the CFHS is computed as: $CFHS = \left[1-\left(α.HSI+β.FSI+γ.RDI\right)\right] . RO . \left[\frac{{yield}_{estimated}}{{yield}_{max}}\right]$ , wherein *HSI* is the Heat Stress Index, FSI is the Frost Stress Index, RDI is the Rainfall Distribution Index, RO is the Recovery Opportunity Index, *yield_{estimated}* is the estimated yield of the crop, and *yieldₘₐₓ* is a maximum yield potential of the crop.

8. The system as claimed in claim 5, wherein the trained machine learning model comprises a combination of time series analysis model and a regression model, trained on historical data on crop stress-recovery cycles.

9. One or more non-transitory machine-readable information storage mediums comprising one or more instructions which when executed by one or more hardware processors cause:
receiving a plurality of inputs comprising a geo-location, an information related to a crop, a daily forecast weather information, and a sowing date of the crop;
simulating a growth pattern of the crop based on the plurality of inputs to generate a crop stage data and identify optimal growing days of the crop;
determining a climate stress index based on the daily forecast weather information and the crop stage data;
determining a recovery opportunity index based on the climate stress index, the crop stage data, and the optimal growing days using a trained Machine Learning (ML) model;
estimating a yield of the crop based on the plurality of inputs and a historical data pertaining to the crop; and
computing a Climate linked Farm Health Score (CFHS) based on the climate stress index, the recovery opportunity index, and the estimated yield, wherein the CFHS quantifies impact of climate on the crop.

10. The one or more non-transitory machine readable information storage mediums as claimed in claim 9, wherein the climate stress index is at least one of i) a heat stress index, ii) a frost stress index, and iii) a rainfall distribution index, determined dynamically based on a temperature value comprised in the daily forecast weather information and the crop stage data..

11. The one or more non-transitory machine readable information storage mediums as claimed in claim 10, wherein the CFHS is computed as: $CFHS = \left[1-\left(α.HSI+β.FSI+γ.RDI\right)\right] . RO . \left[\frac{{yield}_{estimated}}{{yield}_{max}}\right]$ *,* wherein *HSI* is the Heat Stress Index, FSI is the Frost Stress Index, RDI is the Rainfall Distribution Index, RO is the Recovery Opportunity Index, *yield_{estimated}* is the estimated yield of the crop, and *yieldₘₐₓ* is a maximum yield potential of the crop.

12. The one or more non-transitory machine readable information storage mediums as claimed in claim 9, wherein the trained machine learning model comprises a combination of time series analysis model and a regression model, trained on historical data on crop stress-recovery cycles.
